# EUROPÄISCHE PATENTANMELDUNG

(11) **EP 2 687 815 A1**
(43) Veröffentlichungstag der Anmeldung: **22.01.2014**
(21) Anmeldenummer: 12177297.4
(22) Anmeldetag: 20.07.2012
(51) Int. Cl.: G01B 21/04, G01D 21/00, H04L 12/00

(54) **Messmaschinenkommunikation**

(71) Anmelder: Hexagon Technology Center GmbH, 9435 Heerbrugg (CH)
(72) Erfinder: Fritsch, Robert, 9436 Balgach (CH)
(74) Vertreter: Gyaja, Christoph Benjamin

(57) **Zusammenfassung**

Die Erfindung betrifft ein Verfahren zur bidirektionalen Kommunikation zwischen Teilnehmern in einem Messsystem mit einer Anordnung der Teilnehmer in einer kettenförmigen Serienstruktur. In dieser ist jeder der Teilnehmer mit einer ersten Kommunikationsschnittstelle mit einem der Teilnehmer welcher vorangeht und mit einer zweiten Kommunikationsschnittstelle mit einem der Teilnehmer welcher nachfolgt verbunden. Jeder der Teilnehmer weist eine Meldungsverarbeitungseinheit auf, mit welcher die erste und die zweite Kommunikationsschnittstelle zum Senden und/oder Empfangen einer Meldung unabhängig voneinander bedienbar sind.

Die Kommunikation durch die Meldungsverarbeitungseinheit erfolgt dabei mit einem Empfangen der Meldung als digitale Datenstruktur über die erste Kommunikationsschnittstelle und einem Auswerten eines Kennungsbereichs der Meldung durch ein Vergleichen eines Inhalts des Kennungsbereichs mit vorgegebenen Soll-Kriterien.

Abhängig vom Vergleichsergebnis erfolgt ein Modifizieren des Inhalts des Kennungsbereichs der Meldung anhand einer vorgegebenen Abbildungsfunktion, welche anhand des empfangenen Inhalts des Kennungsbereichs einen zu sendenden Inhalt des Kennungsbereichs bestimmt, mit einem anschließenden Weiterleiten der in ihrem Kennungsbereichs modifizierten Meldung über die zweite Kommunikationsschnittstelle und/oder ein Verarbeiten der Meldung in dem Teilnehmer.

## Beschreibung

Die Erfindung betrifft ein Verfahren zur bidirektionalen Kommunikation zwischen Teilnehmern in einem Messsystem nach dem Oberbegriff des Anspruchs 1, einen Teilnehmer nach dem Oberbegriff des Anspruchs 11 und ein mit derartigen Teilnehmern ausgestattetes Koordinatenmessgerät nach dem Oberbegriff des Anspruchs 14.

Bei einer Vielzahl von technischen Geräten werden mehrere elektronische Subsysteme in einem Kommunikationsverband zusammengeschaltet, welchen unterschiedlichste Funktionen zukommen können, beispielsweise Sensoren, Aktoren, Schalter, Anzeigen, Messeinheiten, Controllersysteme, Monitorsystem, Überwachungs- und Debug-Geräte, etc. Diese können fest im Gerät verbaut und verschaltet sein - etwa im Rahmen der Produktion des Geräts - können aber auch modular austauschbar sein, sei es im Servicefall oder während des regulären Betriebs.

Die vorliegende Erfindung betrifft insbesondere Messsystem. Beispiele für solche Messsysteme, welche als Koordinatenmessgeräte ausgeführt sind, finden sich etwa in WO 2005/017448, EP 2 270 425 oder WO 2006/079604. Diese Messsysteme weisen mehrere Subsysteme auf, speziell in Form von elektronischen Linear- und/oder Dreh-Lagegebern zur Messwerterfassung, welche mit einem Controller zur Messwertauswertung und Steuerung der Messabläufe in einer Kommunikationsbeziehung stehen. Diese Subsysteme sind meist räumlich verteilt an dem Gerät angeordnet, sodass das Herstellen der Kommunikationsverbindung zwischen den Subsystemen mit einem entsprechenden Verkabelungsaufwand verbunden ist. Es sind also die Teilnehmer der Kommunikation verkabelt, um die Kommunikationsverbindung und/oder eine Energieversorgung herzustellen. Neben den Lagegebern können auch noch weitere Geräte, etwa Tastköpfe, Messköpfe, Sensoren z.B. zur Erfassung von Umgebungsbedingungen wie Temperatur, etc. oder auch Aktoren wie Achsantriebe, motorisierte Schwenkköpfe, Anzeigeelemente, etc. vorhanden sein. Um den Verkabelungsaufwand gering zu halten wird in den Messmaschinen versucht, möglichst wenige, vorzugsweise nur eine Kommunikationsverbindung für alle beteiligten Geräte zu nutzen. Auch wird versucht die Kommunikationsverbindungen vorteilhaft zu gestalten, also etwa doppelte Leitungsführungen möglichst zu vermeiden, welche etwa bei einer sternförmigen Verkabelung jedes Subsystems hin zum Controller vielfach auftreten.

Neben den oben beschriebenen Subsystemen, welche meist fix am Meßsystem montiert sind, können auch austauschbare Komponenten an der Messung beteiligt sein, beispielsweise austauschbare Messköpfe, Messtaster, Zusatzgelenke, optische Probenköpfe, etc., welche an unterschiedlichste Messaufgaben angepasst sind und ebenfalls in die Gerätekommunikation eingebunden werden. Da diese während des Betriebs oder im Rahmen einer Umkonfiguration austauschbar sind, verändert sich dabei auch das Kommunikationssystem. Auch im Falle von Servicearbeiten und Reparaturen kann ein auswechseln eines Subsystems im Kommunikationssystem erforderlich sein.

Bei derartigen Meßsystemen erfolgt die Kommunikation zwischen den Geräten oder Subsystemen, also den Teilnehmern am Kommunikationssystem, oftmals über Busstrukturen. Beispielsweise kann für die Kommunikation eine Busstruktur - wie z.B. RS232, RS422, RS423, RS485, oder auch andere - verwendet werden. Eine gängige, bezüglich der örtlichen Anordnung der Geräte im Meßsystem oft vorteilhafte Topologie ist dabei eine Serienstruktur. In dieser sind die Teilnehmer einer nach dem anderen angeordnet und mit jeweils nur einem Kabel zwischen den Geräten dem Bus verbunden. Dabei finden sich unter den Teilnehmern vielfach auch mehrere gleichartige, z.B. mehrere Lagegeber desselben Typs, welche über den gemeinsamen Bus mit einer Steuereinheit kommunizieren, also etwa die von ihnen ermittelten Lageinformationen zur Steuereinheit übermitteln. Im Sinne einer einfachen Lagerhaltung und Wartung sind die gleichartigen Subsysteme vor dem Einbau ins Messsystem meist ohne jeglichen Unterschied, sodass sie an unterschiedlichsten Stellen in der Maschine einsetzbar sind.

In der Anwendung ist es jedoch von Bedeutung, die an den Bus angeschlossenen Subsysteme unterscheiden und identifizieren zu können, selbst wenn es sich um gleichartige Subsysteme handelt. Bei Koordinatenmessgeräten ist es beispielsweise bei einer Vermessung essenziell zu wissen, mit welchem Lagegeber welche Bewegungsachse des Meßsystems erfasst wird.

Hierzu kann beispielsweise eine Geräteadresse verwendet werden, welche an den Teilnehmern einstellbar ist. Diese Adresse wird oft erst direkt vor oder nach dem Einbau des Teilnehmers vergeben, etwa durch DIP-Schalter, Codierstecker, elektronische Programmiergeräte etc. Ein derartiges Vorgehen ist jedoch fehleranfällig und zeitaufwändig.

In der Literatur finden sich in anderen Technologiegebieten einige Ansätze zur Vermeidung einer manuellen Adressvergabe. Beispielsweise beschreibt
US 5,666,557 eine automatische Adressierung von Peripheriegeräten in einem Datenverarbeitungssystem mit Hilfe von Stecker-Kennungen;
WO 98/03921 die automatische Erkennung der Reihenfolge von Geräten eines Netzwerk-Kommunikationsgeräts anhand einer Pulslänge eines Zusatzsignals;
WO 2004/039010 ein Setzen von Adressen von Kind-Geräten durch ein Eltern-Gerät;
WO 2007/104668 bzw. DE 10 2006 025 174 eine Adressvergabe für Fahrerassistenzsysteme.

All diesen bekannten Ansätzen ist gemein, dass den Teilnehmern von außen eine Adresse vergeben wird. Dies ist selbst bei obigen Ansätzen aufwändig und erfordert hierfür in vielen Fällen zusätzliche Hardware - wie Codierschalter, Codierstecker, zusätzliche Stecker-Pins, etc. Auch ist der Aufwand zur Vergabe dieser Adresse, sei es bei der Produktion, Inbetriebnahme oder im Rahmen einer Businitialisierung nicht zu vernachlässigen. Eine Vergabe von falschen Adressen ist zudem eine häufige Fehlerquelle in Messsystemen, speziell bei einem Austausch von Komponenten im Servicefall. Durch vertauschte Adressen von Kommunikationsteilnehmern können nicht nur Fehlfunktionen, sondern auch Hardwareschäden hervorgerufen werden.

Es ist daher eine Aufgabe der vorliegenden Erfindung die Kommunikation von Teilnehmern einer Messmaschine zu verbessern.

Eine Aufgabe besteht auch darin, ein Messmaschinenkommunikationssystem bereitzustellen, welches einfach und kostengünstig realisierbar ist und bei welchem die Notwendigkeit einer spezifischen Adressvergabe für jeden Teilnehmer entfällt - speziell eine explizite, eindeutige Adressvergabe an die Teilnehmer von aussen.

Ein Teil der Aufgabe ist dabei auch, dass im Maschinenkommunikationssystem alle Teilnehmer bzw. Klassen von Teilnehmern bezüglich ihrer Kommunikationsschnittstellen gleichartig ausgebildet sein können und vor deren Einsatz im Kommunikationssystem keine teilnehmerspezifischen Konfigurationen, etwa in Form einer Adresscodierung, erforderlich sind.

Es ist entsprechend auch eine Aufgabe ein verbessertes Kommunikationsverfahren für Subsysteme in einer Maschine, insbesondere in einer Messmaschine, bereitzustellen.

Eine Aufgabe ist somit auch ein entsprechendes Verfahren zur Kommunikation von Teilnehmern des Messmaschinenkommunikationssystems bereitzustellen, bei welchem auf eine spezifische Adressvergabe für jeden der Teilnehmer verzichtet werden kann.

Eine Teilaufgabe ist auch die Bereitstellung entsprechender Teilnehmer-Software zur Implementierung des Verfahrens.

Bei einem erfindungsgemäßen Kommunikationssystem bzw. Kommunikationsverfahren wird an die einzelnen Teilnehmer des Kommunikationssystems keine Vergabe einer teilnehmerspezifischen, im Kommunikationssystem eindeutigen Adresse durchgeführt. Dies vereinfacht die Lagerhaltung, Produktion und Wartung und hilft Flüchtigkeitsfehler bei einer Adressvergabe oder Adresscodierung zu vermeiden.

In der vorliegenden Erfindung wird auf eine spezifische, jedem Teilnehmer eigene und eindeutige Adresse verzichtet.

Die Teilnehmer am Kommunikationssystem organisieren sich selbst, ohne dass jedem von ihnen eine spezifische Adresse zugewiesen wird. Ein allfällig vorhandenes Steuergerät kann sich voll auf die Steueraufgabe konzentrieren und wird für die Kommunikationsbeziehungen primär nicht benötigt, es ist also für diese erfindungsgemäße Kommunikation nicht als Kommunikationsmaster relevant.

Bei dem erfindungsgemäßen Kommunikationssystem sind die Teilnehmer in einer Serienstruktur angeordnet und der verwendete Bus, also die physikalischen Kommunikationsleitungen oder Kommunikationskanäle, wird in jedem Gerät hardwaremäßig aufgetrennt. Es wird also bei einem Teilnehmer - welcher sich insbesondere nicht am Anfang oder Ende des Busses befindet - mit einer ersten und mit zumindest einer zweiten Kommunikationsschnittstelle kommuniziert, über welche der Teilnehmer jeweils mit einem Vorgänger und einem Nachfolger in einer Kommunikationsbeziehung steht. Dadurch kann der Teilnehmer entsprechend der verwendeten Schnittstelle den linken vom rechten Nachbarn unterscheiden, also den Vorgänger und den Nachfolger. Die Teilnehmer bilden dabei sozusagen eine Kette und die Kommunikation zwischen den Teilnehmern erfolgt jeweils eins zu eins, also direkt zwischen zwei Teilnehmern und nicht über eine globale Bus-Leitung zu allen Teilnehmern zugleich.

Der linke und rechte Teil vom Kommunikationsbus ist dabei teilnehmerintern auf unterster Ebene physikalisch getrennt. Es erfolgt also keine direkte Hardware-Durchschleifung der Kommunikationsleitungen von der ersten zur zweiten Schnittstelle in Form eines elektrischen Kontakts. Es handelt sich also um physikalische Kommunikationsschnittstellen und physikalische Verbindungen zwischen den Teilnehmern und nicht um rein logische Strukturen auf höheren Ebenen, die etwa rein softwaremäßig implementierbar sind.

Wenn eine Meldungsweitergabe von der ersten zur zweiten Schnittstelle oder umgekehrt erfolgt, so geschieht dies auf einer höheren Protokollebene, wie diese im Folgenden erläutert wird. Die Funktion des Teilnehmers könnte somit ähnlich jener eines Repeaters, einer Bridge oder eines Routers beschrieben werden.

Dabei kann teilnehmerintern auch ein Zwischenspeicher von empfangenen Meldungen durchgeführt werden, beispielsweise um Zugriffskonflikte auf der Schnittstelle zu vermeiden. Solche Konflikte könnten etwa auftreten, wenn ein Weiterleiten einer empfangenen Meldung und ein gleichzeitiges Senden einer im Teilnehmer selbst generierten Meldung anstehen. Im Falle einer Schnittstelle, welche im Halbduplexbetrieb arbeitet, könnte es auch zu Zugriffskonflikten bei einem gleichzeitigen Senden und Empfangen von Meldungen kommen, welche ebenfalls durch ein Zwischenspeichern der zu sendenden Meldung vermieden werden kann.

Als Kommunikationsbus im Sinne der vorliegenden Erfindung kommen unterschiedlichste Systeme und physikalische Ausbreitungswege in Betracht, beispielsweise optisch, elektrisch, kapazitiv oder induktiv. So können die Kommunikationsschnittstellen etwa wie in RS232, RS422, RS423, RS485 spezifiziert ausgeführt sein. Auch sind eine Vielzahl von weiteren elektronischen Bauteilen bzw. IP-Cores für Kommunikationsschnittstellen bekannt, welche erfindungsgemäß zur Kommunikation zwischen jeweils zwei Teilnehmern eingesetzt werden können.

Wie bereits erwähnt, erfolgt die Kommunikation in Form von Meldungen, welche über die Kommunikationsschnittstellen gesendet und/oder empfangen werden können. Es handelt sich bei den Meldungen um digital dargestellte Informationen, welche in Form von - meist paketartig übermittelten - Datenströmen über die Schnittstellen von einem Teilnehmer zum Nächsten weitergegeben werden. Der Dateninhalt dieser Meldungen ist entsprechend zu interpretieren und kann beispielsweise eine Präambel, einen Kennungsbereich, einen Befehlsbereich, einen Datenbereich, einen Checksummenbereich bzw. eine - entsprechend des verwendeten Übertragungsprotokolls definierte - Kombination dieser Bereiche aufweisen.

Diese Meldungen werden über eine Schnittstelle eines vorgehenden Teilnehmers gesendet und von einer Schnittstelle des damit verbundenen Teilnehmers empfangen.

Die Teilnehmer haben dabei wie bereits erläutert keine teilnehmerspezifisch eindeutig zugewiesenen expliziten Adressen, auf welche hin die Meldungen ausgewertet werden um zu entscheiden ob die Meldung vom Teilnehmer verarbeitet wird oder nicht.

Erfindungsgemäß wird stattdessen ein Kennungsbereich einer empfangenen Meldung ausgewertet indem dieser im Teilnehmer mit vorgegebenen Bedingungen verglichen wird. Dabei ist in jedem Teilnehmer eine Abbildung für die Meldungskennung x hinterlegt. Ohne Beschränkung der Allgemeinheit wird zur Erläuterung des Prinzips im Folgenden eine Meldungskennung x in Form von einer Nummer aus dem Bereich der ganzen Zahlen und eine Abbildungsfunktion der Meldungskennung x in Form von f(x)=x-1 verwendet. In praktischen Implementierungen können Art und/oder Wertebereich der Kennungen sowie die Abbildungsfunktion auch anders gewählt werden.

Hat in einem einfachen, anschaulichen Beispiel die Meldungskennung x einer empfangenen Meldung einen vordefinierten Wert, beispielsweise Null, so wird diese Meldung im empfangenden Teilnehmer verarbeitet. Ansonsten wird die empfangene Meldungskennung x entsprechend der Abbildungsfunktion f(x)=x-1 um Eins erniedrigt und die modifizierte Meldung dann über eine andere Schnittstelle als jene, über welche die Meldung empfangen wurde weitergesendet. Der vordefinierte Wert ist dabei aber keine teilnehmerspezifische Adresse, sondern ist für alle Teilnehmer oder Gruppen von mehreren Teilnehmern gleich.

Im Rahmen der Verarbeitung der Meldung im Teilnehmer kann gegebenenfalls eine Antwort auf die Meldung generiert werden, welche vom Teilnehmer an einen oder mehrere andere Teilnehmer gesendet wird. Die generierte Antwort kann in die Richtung zurückgesendet werden, aus welcher die anfragende Meldung kam, in die andere Richtung weitergesendet werden oder in beide Richtungen gesendet werden. Bei manchen Meldungen kann eine Antwort auch ausbleiben und nichts gesendet werden. Die Abbildungsfunktion kann daher auch von der Schnittstelle s an welcher die Meldung empfangen wurde abhängig sein, insbesondere für die Wahl der Sendeschnittstelle über welche eine allfällige Weiterleitung und/oder Antwort erfolgt. Also beispielsweise als Abbildungsfunktion in der Form f(x,s).

Hat eine Meldung eine spezielle Kennung, z.B. eine spezielle Nummer, so kann diese auch an einen nachfolgenden Teilnehmer weitergesendet werden ohne dabei die Kennung zu ändern wobei jeder Teilnehmer der die Meldung empfängt, diese auch verarbeitet. Damit können mit einer einzigen Meldung mehrere oder alle Teilnehmer angesprochen werden. Dies kann durch eine spezielle, komplexere Abbildungsfunktion der Meldungskennungen realisiert werden. Im obigen Beispiel kann etwa mit einer speziellen Abbildung für Meldungskennungen in einem bestimmten Bereich der zulässigen Kennungen ein unverändertes Weiterleiten der Meldung und eine Verarbeitung der Meldung in der Teileinheit ausgelöst werden. Beispielsweise kann mit einer Kennung innerhalb eines definierten Wertebereichs, beispielsweise indem für x > 200 oder einer Meldung mit der Kennung "B", die Abbildung f(x) = x gelten. Dabei kann zudem eine Verarbeitung der Meldung in der Teileinheit ausgelöst werden.

Weiters können spezielle Meldungskennungen in Meldungen nur bestimmte Typen von Teilnehmern ansprechen. Beispielsweise durch eine Abbildungsfunktion, welche abhängig ist von der Art des Teilnehmers, etwa für alle Lagegeber, alle Lineargeber, alle Drehgeber, alle Messköpfe, etc. Dies kann etwa anhand einer teilnehmerartspezifischen Identifikation y des Teilnehmers erfolgen, welche in der Abbildungsfunktion f(x,y) bzw. f(x,s,y) berücksichtigt wird. Anhand dieser Abbildung können etwa nicht angesprochene Teilnehmer die Meldung weiterleiten, ohne diese zu verändern oder zu verarbeiten - wohingegen die angesprochenen Teilnehmer diese Meldung verarbeiten und gegebenenfalls deren Kennung vor einer Weitervermittlung abbilden.

Eine Erweiterung des hier dargestellten Prinzips auf spezielle Teilnehmer mit mehr als zwei Schnittstellen, welche folglich mehr als zwei Nachbarn aufweisen können, kann ebenfalls durchgeführt werden. Dabei kann bei geeigneter Wahl der Abbildungsfunktion zur Änderung der Kennung auch eine Art Netztrennung einer allfällig daraus resultierenden Abzweigung oder Stichleitung erzielt werden. Soll beispielsweise ein Unternetz zwischen einer Untergruppe von Teilnehmern gebildet werden, könnten zu deren Trennung eine spezielle Abbildungsfunktion Verwendung finden und eine zugehörige spezielle Kennung genutzt werden, welche von den anderen Teilnehmern nur durchgeleitet aber nicht geändert wird. Für die Kommunikation einer somit gebildeten Untergruppe wären die übrigen Teilnehmer quasi nicht existent.

Diese Erfindung kann überall dort eingesetzt werden, wo Geräte in einem Messsystem über einen Bus miteinander kommunizieren. Insbesondere die Komponenten in Messgeräten wie beispielsweise Articulated Arms, Koordinatenmessgeräten bzw. -maschinen (CMM) oder geodätischen Instrumenten können als Teilnehmer einer erfindungsgemäßen Kommunikation ausgestaltet sein.

Das erfindungsgemäße Verfahren zur Maschinenkommunikation kann beispielsweise bei CMMs beim Wechseln der Mess-Probe vorteilhaft angewandt werden. Die neue Probe mit ihrer Messsensorik als neu hinzukommende(r) Teilnehmer im Kommunikationssystem der CMM, fügt sich automatisch in das bestehende Kommunikationssystem ein. Es müssen dabei zuvor keine expliziten, spezifischen Adressen für diese Geräte festgelegt werden. Dieselbe Probe kann an unterschiedlichen oder unterschiedlich konfigurierten Messgeräten verwendet werden, ohne dass an dieser oder deren Einstellungen etwas verändert werden muss. Auch im Service-Fall können - mit Hilfe des erfindungsgemäßen Verfahrens und mit Teilnehmern oder Geräten welche erfindungsgemäß ausgeführt sind - die kommunikationsbeteiligten Komponenten der Maschine einfach durch gleichartige ausgetauscht werden, ohne dass ein Servicetechniker den Ersatzkomponenten spezifische Kommunikations-Adressen vergeben muss oder Änderungen an der Maschinenkonfiguration in der Steuereinheit vornehmen muss.

Das erfindungsgemäße Verfahren und die erfindungsgemäße Vorrichtung werden nachfolgend anhand von konkreten Ausführungsbeispielen, welche in den Zeichnungen schematisch dargestellt sind, rein beispielhaft näher beschrieben. Dabei wird auch auf weitere Vorteile der Erfindung eingegangen. Im Einzelnen zeigen:
- Fig. 1: eine erste beispielhafte Ausführungsform eines erfindungsgemässen Kommunikationssystems;
- Fig. 2: eine zweite beispielhafte Ausführungsform eines erfindungsgemässen Kommunikationssystems;
- Fig. 3: eine dritte beispielhafte Ausführungsform eines erfindungsgemässen Kommunikationssystems mit zusätzlicher Synchronisationsleitung;
- Fig. 4: ein Diagramm eines ersten beispielhaften Ablaufs einer erfindungsgemässen Maschinenkommunikation;
- Fig. 5: ein Diagramm eines zweiten beispielhaften Ablaufs einer erfindungsgemässen Maschinenkommunikation;
- Fig. 6: ein Diagramm eines dritten beispielhaften Ablaufs einer erfindungsgemässen Maschinenkommunikation;
- Fig. 7: ein Diagramm eines vierten beispielhaften Ablaufs einer erfindungsgemässen Maschinenkommunikation;
- Fig. 8: ein Diagramm eines fünften beispielhaften Ablaufs einer erfindungsgemässen Maschinenkommunikation;
- Fig. 9: ein Diagramm eines sechsten beispielhaften Ablaufs einer erfindungsgemässen Maschinenkommunikation;
- Fig. 10: ein Diagramm eines siebten beispielhaften Ablaufs einer erfindungsgemässen Maschinenkommunikation;
- Fig. 11: ein erstes beispielhaftes, vereinfachtes Ablaufdiagramm einer Ausführungsform einer erfindungsgemässen Maschinenkommunikation;
- Fig. 12: ein zweites beispielhaftes, vereinfachtes Ablaufdiagramm einer Ausführungsform einer erfindungsgemässen Maschinenkommunikation;
- Fig. 13: ein erstes Beispiel einer Ausführungsform einer Messmaschine in welcher die erfindungsgemässe Maschinenkommunikation angewandt ist;
- Fig. 14: ein zweites Beispiel einer Ausführungsform einer Messmaschine, in welcher die erfindungsgemässe Maschinenkommunikation angewandt ist.

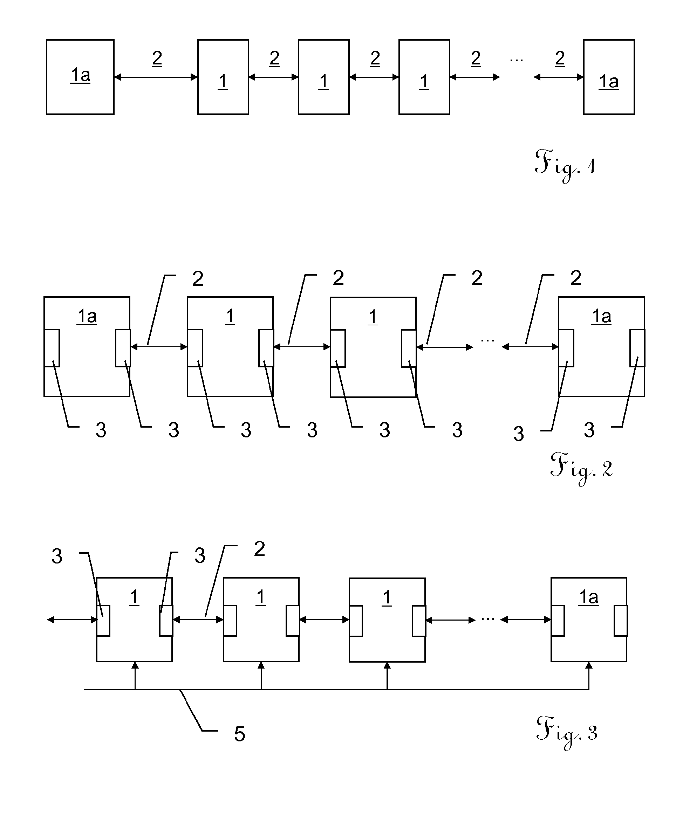

**In** **Fig. 1** ist eine beispielhafte Ausführungsform eines erfindungsgemäßen Kommunikationssystems 10 zum bidirektionalen Austausch von Meldungen über eine Serienstruktur von Teilnehmern gezeigt. Die Teilnehmer 1, 1a des Kommunikationssystems, hier auch als Geräte 1, 1a bezeichnet, weisen Schnittstellen zum Austausch von Meldungen auf, über welche zwischen den Teilnehmern 1, 1a eine kommunikative Verbindung herstellbar ist. Diesen Geräten 1, 1a können dabei die unterschiedlichsten Funktionen und Aufgaben zukommen, beispielsweise Sensoren, Aktoren, Gateways, Steuergeräte, etc. Die Teilnehmer 1, 1a verfügen über zumindest zwei Schnittstellen, sodass diese jeweils mit einem Vorgänger-Teilnehmer und einem Nachfolger-Teilnehmer verbunden werden können. Es wird dabei infolge auch entsprechend der Darstellung von einer Verbindung nach links oder rechts gesprochen. Die Teilnehmer 1, 1a sind also im Kommunikationssystem 10 in einer Art Kette hintereinander angeordnet. Die Teilnehmer 1, 1a bilden - wie in der Figur gezeigt - eine Serienstruktur, in welcher ein Teilnehmer 1, 1a jeweils Eins-zu-eins mit seinem Nachbarn verbunden ist, wobei ein erster und ein letzter Teilnehmer 1a der Serienstruktur offensichtlich jeweils nur mit einer einzigen seiner Kommunikationsschnittstellen eine Verbindung 2 hat. Entsprechend könnte der jeweils letzte und erste Teilnehmer 1a auch nur eine Schnittstelle aufweisen, insbesondere sofern dessen Position als letzter oder erster Teilnehmer fix ist, speziell wenn in diese Richtung keine Erweiterbarkeit des Kommunikationssystems mit weiteren Teilnehmern 1, 1a möglich sein soll oder muss.

In einer speziellen Ausführungsform können auch der letzte und der erste Teilnehmer der Serienstruktur über jeweils zwei Kommunikationsschnittstellen verfügen. Somit kann auch zwischen dem letzten und ersten Teilnehmer eine Kommunikationsverbindung hergestellt werden, sodass der letzte Teilnehmer dem ersten vorangeht und der erste dem letzten nachfolgt, sodass aus der Anordnung der Teilnehmer ein Ring entsteht, in welchem eine erfindungsgemäße Kommunikation stattfindet. Damit kann beispielsweise die Notwendigkeit eine Meldung, speziell einer Broadcast- oder Multicast-Meldung, über beide Schnittstellen zu senden entfallen. Um mehrfache Umläufe zu vermeiden können dadurch jedoch Mechanismen zur Nicht-Weiterleitung von wiederempfangenen eigenen Meldungen implementiert werden, beispielsweise in diesbezüglich entsprechend angepassten Abbildungsfunktionen und Verarbeitungskriterien.

Im Sinne der zuvor beschriebenen Erweiterbarkeit bzw. flexiblen Austauschbarkeit von Teilnehmern 1, 1a im Kommunikationssystem 10 sowie der vorzugsweisen Gleichartigkeit und Ersetzbarkeit der Teilnehmer im Kommunikationssystem, weisen vorzugsweise alle Teilnehmer zwei Schnittstellen auf, auch wenn beim ersten und/oder letzten Teilnehmer 1a der Kette dies nicht zwingend erforderlich wäre. In einer anderen Ausführungsform kann beispielsweise ein Teilnehmer 1a als Steuergerät ausgebildet sein, welches immer am Kopf der Kommunikationsstruktur 10 steht und entsprechend nur eine Schnittstelle aufweist, in die andere Richtung ist der Bus jedoch erweiterbar, wobei eine Schnittstelle des letzten Teilnehmers immer offen bleibt bzw. durch einen speziellen Blindstecker abgeschlossen wird. Spezielle Teilnehmer können auch mehr als zwei Schnittstellen aufweisen um Abzweigungen zu realisieren, wie dies bereits erläutert wurde.

Die Schnittestellen sind dabei unabhängig voneinander bedienbar. Es handelt sich also beispielsweise nicht um zwei parallelgeschaltete Stecker, zwischen welchen Kommunikationsleitungen durchgeschleift sind und welche im Gerät abgegriffen werden, wie dies etwa bei einem CAN-Bus der Fall ist. Es sind zwei vollwertige, eigenständige Kommunikationsschnittstellen, welche bidirektional, also im Halbduplex oder Vollduplex-Betrieb mit einer Schnittstelle eines Nachbarn kommunizieren können. Die Kommunikation kann nicht nur durch elektrische Signale, sondern beispielsweise auch durch Licht oder durch elektromagnetische Kopplung erfolgen.

Erfindungsgemäß wird ein verbessertes Verfahren zur bidirektionalen Kommunikation zwischen Teilnehmern in einem Messsystem bereitgestellt. Insbesondere handelt es sich beim Messsystem um ein Positionsmesssystem einer CMM in welchem die Teilnehmer als Messsensoren ausgebildet sind.

Die Anordnung der Teilnehmer erfolgt dabei in einer kettenförmigen Serienstruktur, in welcher - abgesehen von einem ersten und einem letzten der Teilnehmer in der Serienstruktur - jeder der Teilnehmer mit einer ersten Kommunikationsschnittstelle mit einem der Teilnehmer welcher vorangeht und mit einer zweiten Kommunikationsschnittstelle mit einem der Teilnehmer welcher nachfolgt verbunden ist.

Jeder Teilnehmer weist eine Meldungsverarbeitungseinheit auf, mit welcher die erste und die zweite Kommunikationsschnittstelle zum Senden und/oder Empfangen einer Meldung unabhängig voneinander bedienbar sind.

Die Kommunikation durch die Meldungsverarbeitungseinheit erfolgt mit einem Empfangen der Meldung als digitale Datenstruktur über die erste Kommunikationsschnittstelle und einem Auswerten eines Kennungsbereichs der Meldung durch ein Vergleichen eines Inhalts des Kennungsbereichs mit vorgegebenen Soll-Kriterien. Der Kennungsbereich enthält dabei Informationen zur Meldungsbehandlung durch den Teilnehmer, wie dies im Folgenden anhand von Beispielen im Detail erläutert wird.

Abhängig vom Vergleichsergebnis erfolgt ein Modifizieren des Inhalts des Kennungsbereichs der Meldung anhand einer vorgegebenen Abbildungsfunktion mit einem anschließenden Weiterleiten der in ihrem Kennungsbereich modifizierten Meldung über die zweite Kommunikationsschnittstelle und/oder ein Verarbeiten der Meldung in dem Teilnehmer.

Die Abbildungsfunktion bestimmt dabei anhand des empfangenen Inhalts des Kennungsbereichs einen zu sendenden Inhalt des Kennungsbereichs.

Bei diesem Verfahren können insbesondere die Soll-Kriterien und die Abbildungsfunktion in allen Teilnehmern dieselben sein.

Es kann dabei die Abbildungsfunktion derart gewählt sein, dass Gruppen von Teilnehmern gebildet und gleichzeitig angesprochen werden. Insbesondere kann dabei die Abbildungsfunktion derart gewählt sein, dass ein Broadcast oder ein Multicast der Meldung durchführbar ist.

Dabei kann das Modifizieren abhängig davon, an welcher der Kommunikationsschnittstellen die Meldung empfangen wurde, erfolgen.

Abhängig von der Meldung, insbesondere von deren Kennung, kann die Verarbeitung ein Generieren und Absetzen einer Antwortmeldung auf die empfangene Meldung
o über die erste Schnittstelle,
o über die zweite Schnittstelle, oder
o über alle Schnittstellen
bewirken. Es kann Abhängig von der Meldung, insbesondere von deren Kennung, jedoch auch kein Generieren und Absetzen einer Antwortmeldung bewirkt werden.

Anhand eines speziellen Unicast-Inhalts des Kennungsbereichs kann im Messsystem ein Unicast (U) ausgeführt werden, bei welchem die Abbildungsfunktion ein dekrementieren des Inhalts des Kennungsbereichs bewirkt. Dabei kann das Verarbeiten erfolgen, wenn der Inhalt des Kennungsbereichs einen vorgegebenen Wert hat, beispielsweise den Wert Null.

Anhand eines speziellen Broadcast-Inhalts des Kennungsbereichs kann im Messsystem ein Broadcast (B) ausgeführt werden, bei welchem die Meldung von allen Teilnehmern verarbeitet wird und - unter Anwendung einer, den Inhalt des Kennungsbereichs nicht verändernden Abbildung, ein Weiterleiten der Meldung durchgeführt wird.

Anhand eines speziellen Multicast-Inhalts des Kennungsbereichs kann im Messsystem ein Multicast (M) ausgeführt werden, bei welchem die Meldung von einem Subset von allen Teilnehmern, welches mehr als einen Teilnehmer umfasst, verarbeitet wird und die Meldung unter Anwendung einer, den Inhalt des Kennungsbereich nicht verändernden Abbildung weitergeleitet wird.

Anhand eines speziellen Antwort-Inhalts des Kennungsbereichs kann im Messsystem eine Antworts-Weiterleitung (A) ausgeführt werden, bei welcher die Abbildungsfunktion ein inkrementieren des Inhalts des Kennungsbereichs bewirkt.

Dabei kann zur Vermeidung von Zugriffskonflikten auf einer der Kommunikationsschnittstellen ein Zwischenspeichern von empfangenen Meldungen in der Meldungsverarbeitungseinheit erfolgen.

Die Erfindung betrifft neben dem Verfahren auch Teilnehmer einer bidirektionalen Messsystem-Kommunikation. Diese Teilnehmer sind dabei insbesondere als Messsensor in einem Positionsmesssystem einer CMM ausgebildet.

Die Teilnehmer weisen dabei eine Meldungsverarbeitungseinheit auf, welche derart ausgebildet ist, dass diese ein Kommunikationsverfahren gemäß einem der Ansprüche 1 bis 10 durchführt und hierbei zumindest zwei unabhängig voneinander von der Meldungsverarbeitungseinheit bedienbare Kommunikationsschnittstellen, welche -abgesehen von einem ersten und letzten Teilnehmer in der Kette - mit einem vorhergehenden bzw. einem nachfolgenden Teilnehmer verbindbar sind. Diese Kommunikationsschnittstellen können beispielsweise entsprechend der RS422, RS423, RS323 oder RS485 Spezifikation ausgeführt sein.

Mittels einer Synchronisationsschnittstelle kann dabei eine Synchronisierung eines teilnehmerinternen, lokalen Taktsignals in allen Teilnehmern erfolgen, wie dies etwa in der Anmeldung EP 11169504 im Detail beschrieben ist.

In der Folge betrifft die Erfindung auch ein Koordinatenmessgerät mit einem Kommunikationssystem mit hier beschriebenen Teilnehmern, welches nach dem erfindungsgemäßen Verfahren arbeitet. Dabei kann insbesondere einer oder mehrere der Teilnehmer als im Betrieb auswechselbarer Teilnehmer, welcher mit dem Kommunikationssystem verbindbar ist, ausgebildet sein, speziell als ein wechselbarer Mess-Probe-Teilnehmer.

Da die Meldungsverarbeitungseinheiten in den Teilnehmern des Messsystems zumeist als digitale Datenverarbeitungseinheiten ausgeführt sind, umfasst die Erfindung auch ein Computerprogrammprodukt mit Programmcode, das auf einem maschinenlesbaren Träger gespeichert ist oder als ein Computer-Daten-Signal, verkörpert durch eine elektromagnetische Welle übertragen wird, zur Durchführung des Verfahrens. Dies gilt insbesondere wenn der Programmcode einen Inhalt eines Kennungsbereichs einer empfangenen Meldung mit einer Soll-Kondition vergleicht und aufgrund des Vergleichsergebnisses den Inhalt des Kennungsbereichs entsprechend einer Abbildungsfunktion modifiziert und dann die modifizierte Meldung weitersendet und/oder die Meldung lokal verarbeitet.

**In** **Fig. 2** ist eine Ausführungsform mit Teilnehmern 1 gezeigt, welche jeweils zwei Kommunikationsinterfaces 3 aufweisen, mittels welchen die Teilnehmer jeweils mit einem linken und rechten Nachbarn über die Verbindung 2 eine direkte bidirektionale Kommunikationsbeziehung herstellen (offensichtlich abgesehen von den jeweiligen Enden der dadurch gebildeten Kette von Geräten). Im gezeigten Kommunikationssystem gibt es keinen Kommunikations-Master - auf der Ebene der Kommunikation sind alle Teilnehmer gleichberechtigt. Jeder der Teilnehmer kann dabei spontan, also von sich aus Meldungen und zu einem beliebigen Zeitpunkt, absetzen und muss nicht erst auf eine Kommunikationszuteilung eines Masters warten. Es werden also keine Token, Timeslots oder vom Master vorgegebene Datenframes, in welchen ein Teilnehmer seine Daten einträgt, verwendet.

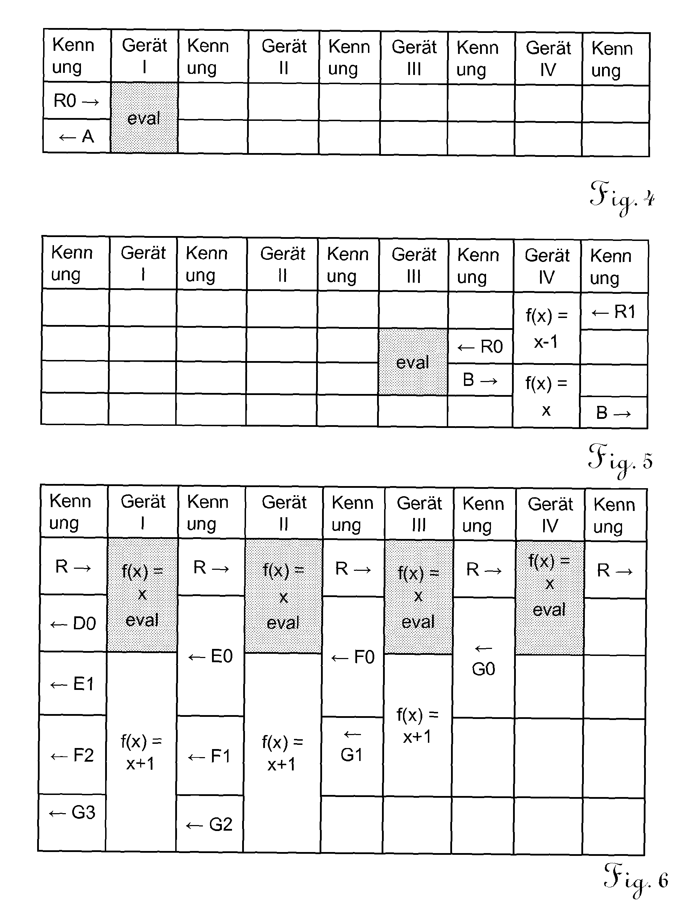

Das dabei angewandte erfindungsgemäße Kommunikationsverfahren ohne Adressvergabe basiert von seinem Grundprinzip her auf einem Abbilden und Weiterleiten von Meldungen zwischen den beiden Schnittstellen, wie dies anhand der folgenden Abläufe beispielhaft dargestellt wird. Kommt eine Meldung, in diesem Beispiel eine Anforderung mit einer Kennung "R0" - was in diesem anschaulichen Beispiel als "R" für "Request" und einer Identifikation von "0" gedeutet werden kann - von links an ein Gerät, fühlt sich dieses angesprochen, verarbeitet oder evaluiert die Meldung ("eval" in Fig. 4 bis 10) und antwortet darauf mit der zugehörigen Antwort in Form einer Meldung mit einer Kennung "A" - was in diesem anschaulichen Beispiel als "A" für "Answer" gedeutet werden kann - über jene Schnittstelle von welcher die Anforderung kam. Als Variante kann das Gerät bei einer anderen empfangenen Kennung auch in die andere oder in beide Richtungen antworten. Bei einer Meldung mit einer wiederum anderen Kennung kann eine Antwort des angesprochenen Geräts auch ausbleiben - das Gerät verarbeitet also die empfangene Meldung ohne dabei eine Antwort oder Bestätigung zu retournieren. Für eine Anforderung von rechts - also für eine Meldung welche über die andere Kommunikationsschnittstelle empfangen wird, gilt dabei analoges.

Bei einem Durchgang einer Meldung durch ein Gerät, wird dabei die Kennung - in diesem anschaulichen Beispiel genau genommen deren Identifikation - über eine Abbildungsfunktion modifiziert. Dies kann abhängig oder unabhängig davon erfolgen, ob das jeweilige Gerät von der Kennung angesprochen ist und die Meldung auch verarbeitet. Im anschaulichen Beispiel wird dabei also speziell die Identifikation in einer Rangfolge erhöht bzw. erniedrigt. Dadurch enthält die Kennung eine Information über die relative Position des Geräts im Kommunikationssystem, welches die Meldung abgesetzt, verarbeitet oder zu verarbeiten hat. Ob, und in welcher Weise eine Kennung variiert wird, kann dabei von der jeweiligen Meldung abhängen. Es können aber auch zusätzliche Informationen, welche im jeweiligen Teilnehmer gespeichert sind, bei der hierbei vorgenommenen Abbildung eingebunden werden, wie dies beispielsweise oben schon beschrieben wurde.

Beispielsweise kann eine sich bei einer Weiterleitung ändernde Kennung genutzt werden, um bei einer Anfrage, welche mehrere oder alle Teilnehmer zu einer Antwort veranlasst - also ein so genannter Broadcast oder Mulitcast - die dabei von jedem Gerät generierten Antwort-Meldungen den jeweiligen Geräten zuordnen zu können.

Beispielsweise kann - mit entsprechenden Abbildungsfunktionen und dazupassenden Kennungen der Meldungen - eine Meldung ein Gerät dazu veranlassen, diese oder eine andere Meldung an das übernächste Gerät zu senden und/oder eine Meldung zurück an das vorige Gerät, etc. Diese Meldung kann das angesprochen Gerät (oder die angesprochenen Geräte) wiederum dazu veranlassen eine weiter Meldung an ein oder mehrere andere Geräte zu schicken, usw.

Durch die erfindungsgemäße Abbildung der Kennungen der Meldungen erreicht man folglich eine Art relative Kommunikation der Geräte in der Serie, ohne dass bei diesen gerätespezifisch unterschiedliche Adressen festgelegt sind.

Allfällige Zugriffsprobleme auf eine Schnittstelle, speziell Kollisionen von mehreren Meldungen, welche zur selben Zeit über dieselbe Schnittstelle übertragen werden sollen, können mit Hilfe eines Zwischenspeichers von Meldungen gelöst werden. Bei entsprechender Wahl des Zwischenspeicherungsalgorithmus kann bei einer Anfrage an mehrere Geräte die Reihenfolge der Antworten derart vorgegeben werden, dass diese immer gleich ist und sich aus dieser Reihenfolge eine eindeutige Zuordnung der Meldungen zu den Geräten ergibt, wodurch beispielsweise auch auf eine Abbildung der Kennung bei den Antworten verzichtet werden kann.

**In** **Fig. 3** ist zusätzlich zum Kommunikationssystem 10 aus Fig. 2 noch eine Synchronisationsleitung 5 gezeigt, welche alle Geräte parallel anspricht. Solche Synchronisationsleitungen 5 sind beispielsweise in Messsystemen in Form einer Triggerleitung zur Auslösung von Messungen gebräuchlich. In einer weiterbildenden Ausführungsform kann es sich bei der Synchronisationsleitung 5 auch um eine kombinierte Takt-Trigger-Leitung handeln, wie diese in der Patentanmeldung mit der Anmeldenummer EP 11169504 beschrieben wird.

Im Folgenden sind zur weiteren Erläuterung einige beispielhafte Ausführungsformen von Kommunikationsabläufen in einem erfindungsgemäßen Messmaschinenkommunikationssystem in Tabellenform dargestellt, wobei die dabei essentiellen Abläufe jeweils chronologisch in Zeilen untereinander dargestellt sind. Diese Aufzählung ist jedoch nicht abschließend sondern dient lediglich zur Erläuterung des erfindungsgemäßen Kommunikationsprinzips.

**Fig. 4** zeigt ein erstes Beispiel eines Ablaufs einer erfindungsgemäßen Kommunikation. Das Gerät I, welches einen Teilnehmer darstellt, empfängt über seine erste Schnittstelle, also von rechts, eine Meldung mit der Kennung R0. Die Auswertung dieser Kennung ergibt, dass diese Meldung vom Gerät I zu verarbeiten ist, und dass eine Antwort A zu generieren ist, welche über die Empfangsschnittstelle, also in diesem Falle über die erste Schnittstelle, nach rechts zurückgesendet wird. Bei anderen Kennungen kann auch eine Verarbeitung erfolgen, bei welcher keine Antwort generiert wird und folglich auch keine neue Meldung übermittelt wird.

**Fig. 5** zeigt ein zweites Beispiel eines Ablaufs einer erfindungsgemäßen Kommunikation, bei welcher das Gerät IV auf seiner zweiten Schnittstelle, also von links eine Meldung mit der Kennung R1 empfängt. Die Auswertung der Kennung dieser Meldung ergibt, dass diese nicht verarbeitet werden soll, sondern die Kennung mit einer Abbildungsfunktion f(x)=x-1 modifiziert und die modifizierte Meldung mit Kennung R0 über die andere, in diesem Falle die erste Schnittstelle, nach links weiterzuleiten ist. Das Gerät III, welches diese Meldung R0 über seine rechte Schnittstelle empfängt und Auswertet, verarbeitet diese Meldung, wobei eine Antwort mit der Kennung B generiert wird, welche in dieselbe Richtung aus der die zugehörige Anfrage R0 empfangen wurde, also ebenfalls über die rechte Schnittstelle hin zu Gerät IV übermittelt wird. Das Gerät IV wendet auf die Meldung mit der Kennung B die Abbildungsfunktion f(x)=x an und sendet die Meldung - in diesem Falle unverändert abgebildet - an seinen rechten Nachbarn weiter.

**Fig. 6** zeigt ein drittes Beispiel eines Ablaufs einer erfindungsgemäßen Kommunikation, bei welcher das Gerät I eine Meldung mit der Kennung R erhält, welche das Gerät dazu veranlasst, die Meldung intern zu verarbeiten und zudem über die jeweils andere Schnittstelle mit einer nach der Abbildungsfunktion f(x)=x an den nächsten Teilnehmer weiterzuleiten - in diesem Falle also wie schon zuvor mit einer Abbildung der Kennung, welche dieselbe Kennung ergibt. Im Rahmen des Verarbeitens wird eine Antwortmeldung D0 generiert, welche über dieselbe Schnittstelle, über welche die Meldung R empfangen wurde, übermittelt wird.

Selbiges wiederholt sich bei jedem der folgenden Geräte II, III und IV. Die Antworten dieser weiteren Geräte sind in der Figur mit unterschiedlichen Kennungen E0, F0, G0 bezeichnet, jedoch können die Kennungen der Antworten durchaus bei jedem der Geräte gleich sein. Es können also auf diese Anfrage hin alle Geräte mit D0 Antworten. Die in der Figur gewählte Darstellung mit unterschiedlichen Kennungen dient primär der Anschaulichkeit, im Sinne einer Gleichartigkeit der Geräte würde jedes Gerät mit D0 antworten. Empfängt nun beispielsweise das Gerät III eine Meldung mit der Kennung G0, so wendet es die Abbildungsfunktion f(x)=x+1 an, und leitet die Meldung mit der geänderten Kennung G1 über die andere Schnittstelle weiter. Die Geräte III, II und I verfahren mit den Meldungen E, F und G, welche sie von rechts empfangen in analoger Weise.

Dieses Beispiel kann als eine Kommunikation in Form eines Broadcasts, welcher alle Teilnehmer anspricht, bezeichnet werden, bei welchem jeder Teilnehmer eine Antwort zurücksendet. Beispielsweise kann in einem Messgerät mit einer derartigen Kommunikation ein Istwert oder ein Messwert einer vorausgegangenen Triggerung von allen Lagesensoren abgefragt werden. Der Empfänger von D0, E1, F2 und G3 kann diese Meldungen anhand deren Nummer der Kennung unterscheiden und den entsprechenden Geräten zuordnen (auch wenn, wie oben erwähnt alle Teilnehmer mit einer D-Kennung geantwortet hätten). In einer anderen Ausführungsform, bei welcher die Antworten der Geräte eine Kennung aufweisen, bei welcher durch die Abbildung bei der Weiterleitung die Kennung nicht verändert wird (etwa wie bei der Kennungen B aus dem vorangegangenen Beispiel), wird eine Zuordnung der Meldungen zu den Geräten über die Reihenfolge der Ankunft der Meldungen hergestellt.

Im hier dargestellten Fall kann zur Vermeidung von Zugriffskonflikten auf den Schnittstellen ein Zwischenspeichern von empfangenen und/oder vom jeweiligen Gerät selbstgenerierten Meldungen durchgeführt werden.

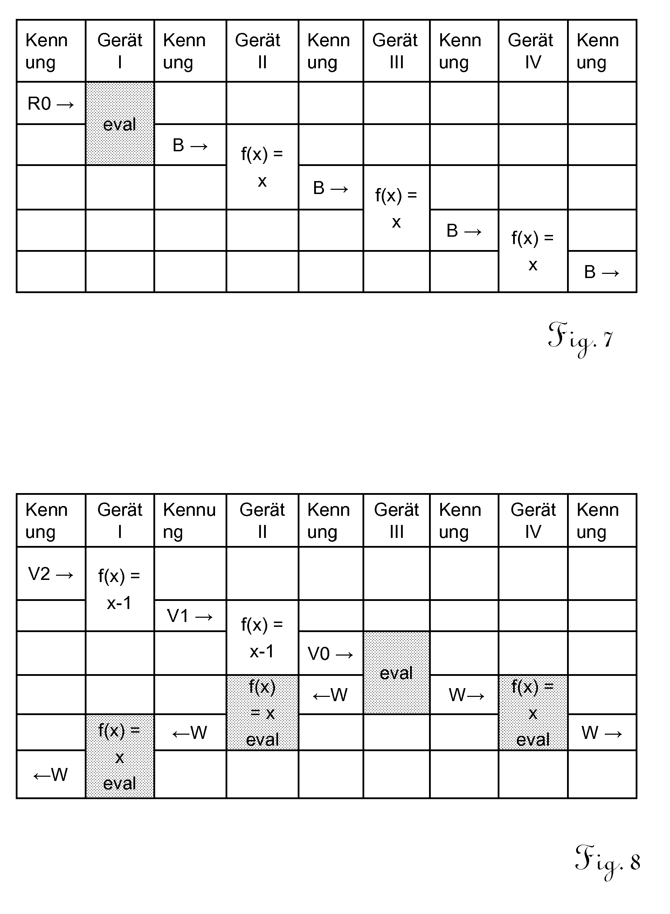

Fig. 7 zeigt ein viertes Beispiel eines Ablaufs einer erfindungsgemäßen Kommunikation, bei welcher das Gerät I eine Meldung mit einer Kennung R0 empfängt, welche die Bedingung zur Verarbeitung im Gerät erfüllt, jedoch keine Weiterleitung der Meldung bewirkt. Die Verarbeitung ergibt jedoch die Antwort B, welche an jener Schnittstelle, an welcher die Meldung R0 nicht empfangen wurde, dem Gerät II übermittelt wird. Die darauf folgenden Geräte II, III und IV empfangen die Meldung B, wenden die Abbildungsfunktion f(x)=x an und schicken die Meldung an der jeweils gegenüberliegenden Schnittstelle weiter.

**Fig. 8** zeigt ein fünftes Beispiel eines Ablaufs einer erfindungsgemäßen Kommunikation, bei welcher das Gerät I eine Meldung mit einer Kennung V2 an der linken Schnittstelle empfängt, mittels der zutreffenden Abbildung die Kennung dekrementiert und die Meldung mit der abgebildeten Kennung V1 - aber ansonsten unverändertem Meldungsinhalt - über die andere, rechte Schnittstelle weitersendet. Gerät II verfährt analog und sendet die Meldung mit der Kennung V0 an Gerät III. Die Meldungskennung V0 veranlasst nun das Gerät III die Meldung zu verarbeiten und nicht mehr weiterzuleiten. Im Zuge der Verarbeitung wird eine Meldung W generiert, welche über beide Schnittstellen des Geräts III abgesetzt wird. Die Geräte, welche die Meldung W empfangen, leiten diese mit unveränderter Kennung an der jeweils anderen Schnittstelle weiter, wodurch die Meldung W sich über alle Kommunikationsteilnehmer verteilt. Die Meldungen mit der Kennung W werden zudem auch in allen Geräten verarbeitet. Es werden auf diese W-Kennungen hin jedoch keine aktiven Antworten übermittelt. Allfällige aus der Verarbeitung der Meldung mit W-Kennung resultierende Informationen können alternativ auch durch ein aktives Anfragen dieser Informationen mittels weiterer Meldungen ausgelesen werden, beispielsweise wie dies in Fig. 6 gezeigt ist.

In einer Messmaschine kann die Meldung V beispielsweise ein Verarbeiten in Form eines Prüfens auf ein überschreiten eines, ggf. in der Meldung enthaltenen, Schwellwerts durch einen Messwert bedeuten. Wird ein Überschreiten festgestellt, so wird diese Information über die Meldung mit der Kennung W an alle Kommunikationsteilnehmer mitgeteilt, welche mit der Verarbeitung der W-Meldung adäquat reagieren können.

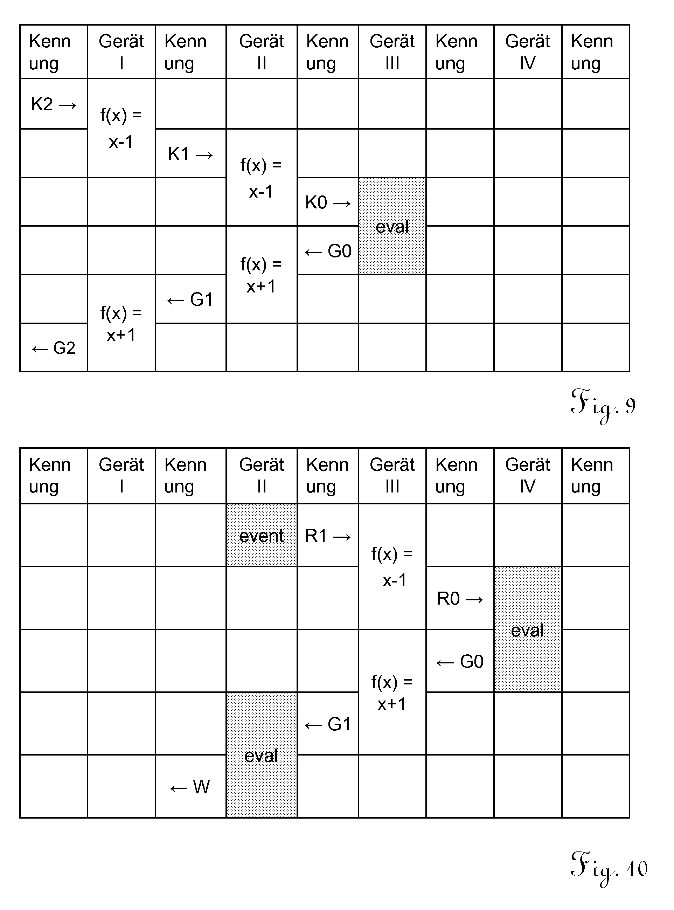

**Fig. 9** zeigt ein sechstes Beispiel eines Ablaufs einer erfindungsgemäßen Kommunikation, bei welchem Gerät I eine Meldung als Anforderung mit der Kennung K2 von links empfängt, abbildet und als Anforderung K1 an Gerät II übermittelt, welches diese wiederum abbildet und als Anforderung K0 an Gerät III weiterleitet. Gerät III verarbeitet den Inhalt dieser Meldung K0 und retourniert eine Antwortmeldung G0 an der Empfangsschnittstelle zurück nach links. Die von Gerät II empfangene Meldungskennung G0 wird abgebildet, indem die Kennung inkrementiert wird und folglich wird die empfangene Meldung mit der modifizierten Kennung G1 weitergeleitet. Analoges geschieht in Gerät I, welches eine Meldung G2 weiterleitet. Das hier nicht dargestellte Gerät 0, welches die Anfrage K2 abgesetzt hat, kann nunmehr bei eintreffen der erwarteten Meldung G2, diese verarbeiten und beispielsweise nicht mehr weiterleiten.

**Fig. 10** zeigt ein siebtes Beispiel eines Ablaufs einer erfindungsgemäßen Kommunikation, bei welchem Gerät II aufgrund eines auslösenden Events eine Meldung mit der Kennung R1 nach rechts überträgt. Das empfangende Gerät III bildet die empfangene Kennung R1 durch eine Dekrementierung auf R0 ab und sendet die Meldung nach rechts zum Gerät IV. Dieses verarbeitet die Meldung mit RO und generiert dabei eine Antwort-Meldung, welche mit der Kennung G0 in Richtung des vorangegangenen Empfangs, also nach links zu Gerät III überträgt. Dieses Gerät III bildet die Kennung G0 durch Inkrementierung nach G1 ab und leitet diese nach links weiter. Gerät II hat als Antwort auf seine vorangegangene Anfrage mit der Kennung R1 auf eine entsprechende Antwort mit einer Kennung G1 gewartet, und verarbeitet daher die empfangene Meldung mit der Kennung G1. Als Ergebnis der Verarbeitung übermittelt Gerät II eine Meldung mit der Kennung W nach links zu Gerät I.

Die in obigen Beispielen verwendeten Kennungen sind rein beispielhaft für die anschauliche Erläuterung des erfindungsgemäßen Kommunikationsprinzips zu sehen. Die Kennungen können im praktischen Einsatz auch abstrakter, insbesondere in Form von digitalen Codierungen implementiert sein. Auch das hier beispielhaft erläuterte Verarbeitungskriterium einer Kennung welche eine Null aufweist, ist rein beispielhaft anzusehen. Entsprechend können die in den Geräten hinterlegten Abbildungsfunktionen und Auswertungen auch entsprechend komplexer sein. Insbesondere müssen die Kennungen sowie deren Abbildungen und Kriterien nicht in menschenlesbarer Form ausgeführt sein.

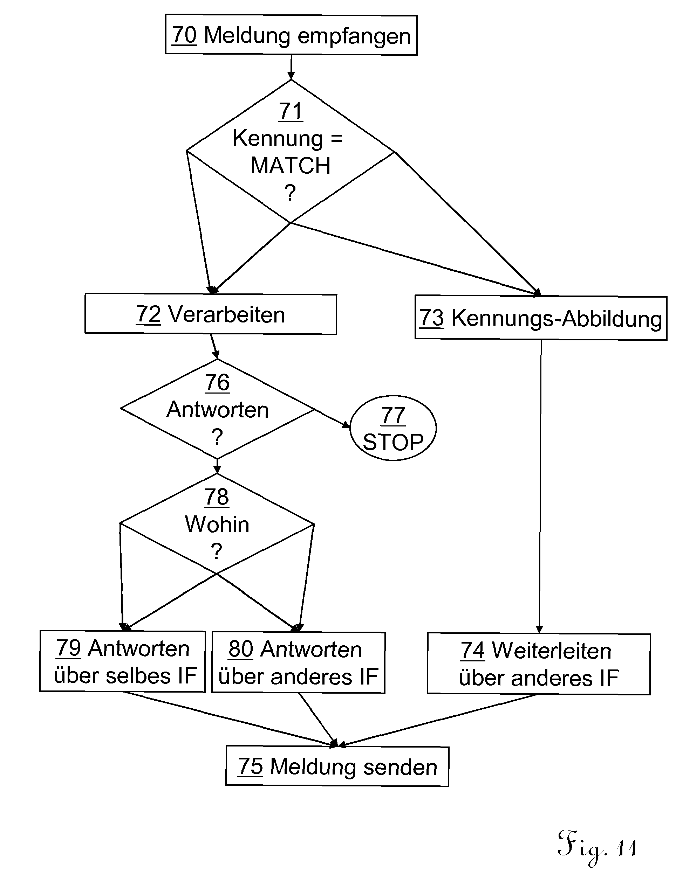

**Fig. 11** zeigt ein erstes Beispiel eines Ablaufs einer erfindungsgemäßen Kommunikation in einem Ablaufdiagramm. Eine vom Teilnehmer empfangene Meldung 70 wird in der Auswertung 71 nach ihrer Kennung ausgewertet. Je nach Ergebnis der Auswertung wird eine Verarbeitung 72 oder eine Kennungsabbildung 73 oder auch sowohl die Verarbeitung 72 als auch eine Kennungsabbildung 73 durchgeführt.

Die Kennungsabbildung modifiziert dabei die Kennung, abhängig von der empfangenen Kennung, wobei in diesem Zusammenhang auch eine Eins-zu-eins Abbildung, also ein Beibehalten der Kennung, als Modifikation zu verstehen ist. Nach der Kennungsabbildung 73 wird ein Weiterleiten der Meldung über eine andere Schnittstelle, als jene an welcher die Meldung empfangen wurde, durchgeführt. Über diese Schnittstelle erfolgt dann ein Senden 75 der modifizierten Meldung.

Beim Verarbeiten 72 kann der Teilnehmer auf Basis des Inhalts der empfangenen Meldung verschiedenste Funktionen ausführen. Das Verarbeiten 72 kann gegebenenfalls auch ein Antworten 76 mit einem Generieren einer Antwortmeldung auslösen. Ansonsten ist das Verarbeiten am Punkt 77 beendet. Eine allenfalls generierte Antwort-Meldung wird dann entsprechend der bei der Verarbeitung hinterlegten Wahl 78 in Block 79 der Empfangsschnittstelle zugewiesen, in Block 80 der andere Schnittstelle zugewiesen oder über beide Blöcke 79 und 80 beiden Schnittstelle zugewiesen. Darauf folgt das Senden 75 über die entsprechende(n) Schnittstelle (n) .

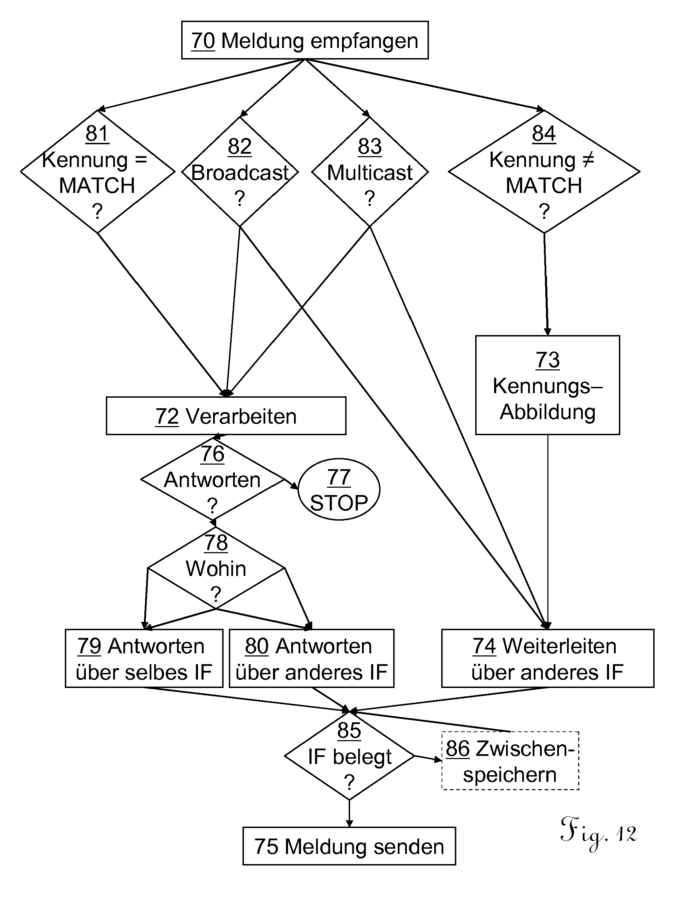

**Fig. 12** zeigt ein zweites Beispiel eines Ablaufs einer erfindungsgemäßen Kommunikation in einem Ablaufdiagramm, welches gegenüber dem ersten erweitert ist. Die in Block 70 empfangene Meldung wird anhand ihrer Kennung nun mehrfach ausgewertet, wobei auch mehrere der Auswertungen zutreffen können.

Auswertung 81 trifft zu, wenn die Kennung einem Unicast-Verarbeitungskriterium entspricht, was in den zuvor erläuterten Beispielen etwa für die Kennungen R0 zutrifft. Hierauf erfolgt die zuvor bereits erläuterte Verarbeitung 72, und allfälliger Antwortgenerierung 76,78,79,80.

Auswertung 82 trifft zu, wenn die Kennung als ein Broadcast interpretiert wird, was in den zuvor erläuterten Beispielen etwa für die Kennungen R und W zutrifft. Hierauf erfolgt die zuvor bereits erläuterte Verarbeitung 72, unter allfälliger Antwortgenerierung 76, 78,79,80, und zudem aber auch eine Weiterleitung 74 der Meldung.

Auswertung 83 trifft zu, wenn die Kennung als ein Multicast interpretiert wird, also wenn die Kennung einem gewissen Kriterium entspricht, welches für eine Sub-Menge der Teilnehmer zutreffen kann(z.B. alle Lineargeber, alle Endschalter, etc.). Bei der Festlegung des Kriteriums können kennungsspezifisch auch weitere Informationen der Meldung und/oder des Teilnehmers herangezogen werden. Hierauf erfolgt bei zutreffen die zuvor bereits erläuterte Verarbeitung 72, unter allfälliger Antwortgenerierung 76, 78,79,80, zudem aber auch eine Weiterleitung 74 der Meldung.

Auswertung 84 bewirkt die zuvor bereits erläuterte Abbildung 73 - zu welcher auch weitere Informationen der Meldung und/oder des Teilnehmers herangezogen werden können - und daraufhin das Weiterleiten 74.

Vor dem Absetzen der Meldung in Block 75 kann bei Abfrage 85 im Falle einer belegten Sendeschnittstelle ein Zwischenspeichern 86 der Meldung erfolgen.

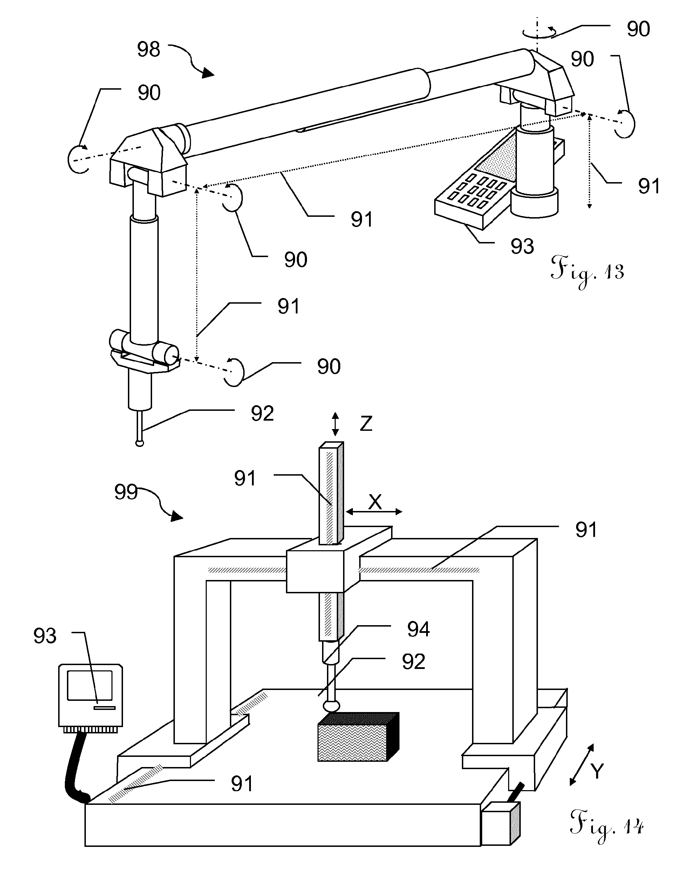

**Fig. 13** zeigt ein erstes Beispiel eines Messsystems 98. Das gezeigte Messgerät 98 ist als Articulated Arm ausgebildet, welcher an seinen Bewegungsachsen mit Lineargebern 91 oder Drehgebern 90 ausgestattet ist. Der Articulated Arm weist auch einen auswechselbaren Messkopf 92 und eine Steuereinheit 93 auf. Dabei sind die an der Messung beteiligten Geräte, also speziell die Lineargeber 91, Drehgeber 90, der Messkopf 92 und die Steuereinheit 93 Teilnehmer am erfindungsgemäßen Kommunikationssystem.

**Fig. 14** zeigt ein zweites Beispiel eines Messsystems 99. Das gezeigte Messgerät 99 ist als Koordinatenmessgerät in Portalbauweise ausgebildet, welche mit Lineargebern 91 ausgestattet ist. Einen auswechselbarer Messkopf 92 ist dabei an einem Schwenkkopf 94 angebracht. Eine externe Steuereinheit 93 koordiniert die Messabläufe. Die datenverarbeitenden Geräte oder Komponenten mit welchen das Messsystem ausgestattet ist, speziell also die Lineargeber 91, der motorisch bewegliche Schwenkkopf 94, der Messkopf 92 und die Steuereinheit 93 sind dabei als Teilnehmer am erfindungsgemäßen Kommunikationssystem ausgebildet, über welches diese angesteuert bzw. abgefragt werden können.

Neben den in den Fig. 13 und Fig. 14 explizit gezeigten Messsystemen kann das erfindungsgemäße Kommunikationsverfahren auch in anders aufgebauten Meßsystemen Anwendung finden, etwa in Theodoliten, Totalstationen, Lasertrackern, Laserscannern, etc.

## Patentansprüche

1. Verfahren zur bidirektionalen Kommunikation zwischen Teilnehmern (1,1a) in einem Messsystem, insbesondere in einem Positionsmesssystem eines
Koordinatenmessgeräts (98,99) mit Messsensoren als Teilnehmer (1,1a),
mit in einer Anordnung der Teilnehmer (1,1a) in einer kettenförmigen Serienstruktur in welcher, abgesehen von einem ersten und einem letzten der Teilnehmer (1a) in der Serienstruktur,
jeder der Teilnehmer (1)
mit einer ersten Kommunikationsschnittstelle mit einem der Teilnehmer (1,1a) welcher vorangeht, und
mit einer zweiten Kommunikationsschnittstelle mit einem der Teilnehmer (1,1a) welcher nachfolgt,
verbunden ist,
wobei jeder Teilnehmer (1,1a) eine Meldungsverarbeitungseinheit aufweist, mit welcher die erste und die zweite Kommunikationsschnittstelle (3) zum Senden und/oder Empfangen einer Meldung unabhängig voneinander bedienbar sind, und
die Kommunikation durch die Meldungsverarbeitungseinheit mit
■ einem Empfangen (70) der Meldung als digitale Datenstruktur über die erste Kommunikationsschnittstelle (3)
■ einem Auswerten eines Kennungsbereichs der Meldung, welcher Informationen zur Meldungsbehandlung durch den Teilnehmer (1,1a) enthält, durch ein Vergleichen (71) eines Inhalts des Kennungsbereichs mit vorgegebenen Soll-Kriterien und,
■ abhängig vom Vergleichsergebnis,
o ein Modifizieren (73) des Inhalts des Kennungsbereichs der Meldung anhand einer vorgegebenen Abbildungsfunktion, welche anhand des empfangenen Inhalts des Kennungsbereichs einen zu sendenden Inhalt des Kennungsbereichs bestimmt, mit
einem anschließenden Weiterleiten (74) der in ihrem Kennungsbereich modifizierten Meldung über die zweite Kommunikationsschnittstelle (3)
und/oder
o ein Verarbeiten (72) der Meldung in dem Teilnehmer (1,1a)
erfolgen.

2. Verfahren nach Anspruch 1, **dadurch gekennzeichnet, dass** die Soll-Kriterien und die Abbildungsfunktion in allen Teilnehmern (1,1a) dieselben sind.

3. Verfahren nach Anspruch 1 oder 2, **dadurch gekennzeichnet, dass**
die Abbildungsfunktion derart gewählt ist, sodass Gruppen von Teilnehmern (1,1a) gebildet und gleichzeitig angesprochen werden, insbesondere wobei die Abbildungsfunktion derart gewählt ist, dass ein Broadcast oder ein Multicast der Meldung durchführbar ist.

4. Verfahren nach einem der Ansprüche 1 bis 3, **dadurch gekennzeichnet, dass**
das Modifizieren abhängig davon, an welcher der Kommunikationsschnittstellen (3) des Teilnehmers (1,1a) die Meldung empfangen wurde, erfolgt.

5. Verfahren nach einem der Ansprüche 1 bis 4, **dadurch gekennzeichnet, dass**
Abhängig von der Meldung, insbesondere von deren Kennung, die Verarbeitung (72)
■ ein Generieren und Absetzen einer Antwortmeldung auf die Meldung
o über die erste Schnittstelle (3),
o über die zweite Schnittstelle (3), oder
o über alle Schnittstellen (3)
bewirkt oder
■ kein Generieren und absetzen einer Antwortmeldung bewirkt.

6. Verfahren nach einem der Ansprüche 1 bis 5, **dadurch gekennzeichnet, dass**
anhand eines speziellen Unicast-Inhalts des Kennungsbereichs im Messsystem ein Unicast ausgeführt wird, bei welchem die Abbildungsfunktion ein dekrementieren des Inhalts des Kennungsbereichs bewirkt und
das Verarbeiten bei einem Inhalt des Kennungsbereichs von einen vorgegebenen Wert durchgeführt wird, insbesondere einem Wert von Null.

7. Verfahren nach einem der Ansprüche 1 bis 6, **dadurch gekennzeichnet, dass**
anhand eines speziellen Broadcast-Inhalts des Kennungsbereichs im Messsystem ein Broadcast ausgeführt wird, bei welchem
die Meldung von allen Teilnehmern (1,1a) verarbeitet wird und
die Meldung unter Anwendung einer den Inhalt des Kennungsbereichs nicht verändernden Abbildung weitergeleitet wird.

8. Verfahren nach einem der Ansprüche 1 bis 7, **dadurch gekennzeichnet, dass**
anhand eines speziellen Multicast-Inhalts des Kennungsbereichs im Messsystem ein Multicast ausgeführt wird, bei welchem
die Meldung von einem Subset von allen Teilnehmern (1,1a), welches mehr als einen Teilnehmer (1,1a) umfasst, verarbeitet wird und die Meldung unter Anwendung einer den Inhalt des Kennungsbereich nicht verändernden Abbildung weitergeleitet wird.

9. Verfahren nach einem der Ansprüche 1 bis 8, **dadurch gekennzeichnet, dass**
- anhand eines speziellen Antwort-Inhalts des Kennungsbereichs im Messsystem eine Antworts-Weiterleitung ausgeführt wird, bei welchem die Abbildungsfunktion ein inkrementieren des Inhalts des Kennungsbereichs bewirkt und/oder
- zur Vermeidung von Zugriffskonflikten auf eine der Kommunikationsschnittstellen (3) ein Zwischenspeichern von empfangenen Meldungen in der Meldungsverarbeitungseinheit erfolgt.

10. Verfahren nach einem der Ansprüche 1 bis 9, **dadurch gekennzeichnet, dass**
die Kommunikation auch zwischen einer ersten Kommunikationsschnittstelle (3) des ersten der Teilnehmer (1a) und einer zweiten Kommunikationsschnittstelle des letzten der Teilnehmer (1a) erfolgt, sodass der erste der Teilnehmer (1a) dem letzen der Teilnehmer (1a) nachfolgt und der letzte der Teilnehmer (1a) dem ersten der Teilnehmer (1a) vorangeht und die Serienstruktur der Teilnehmer (1a) zu einem Ring geschlossen ist.

11. Teilnehmer (1,1a) einer bidirektionalen Messsystem-Kommunikation, insbesondere ein Teilnehmer (1,1a) als Messsensor in einem Positionsmesssystem eines Koordinatenmessgeräts, **dadurch gekennzeichnet, dass** der Teilnehmer (1,1a)
■ eine Meldungsverarbeitungseinheit, welche derart ausgebildet ist, dass diese ein Kommunikationsverfahren gemäß einem der Ansprüche 1 bis 10 durchführt und
■ zumindest zwei unabhängig voneinander von der Meldungsverarbeitungseinheit bedienbare Kommunikationsschnittstellen, welche mit einem vorhergehenden und einem nachfolgenden Teilnehmer (1,1a) verbindbar sind,
aufweist.

12. Teilnehmer nach Anspruch 11, **dadurch gekennzeichnet, dass**
die Kommunikationsschnittstellen (3) entsprechend der RS422, RS423, RS323 oder RS485 Spezifikation ausgeführt sind.

13. Teilnehmer nach Anspruch 11 oder 12, **dadurch gekennzeichnet, dass**
über eine Synchronisationsschnittstelle (5) eine Synchronisierung eines teilnehmerinternen, lokalen Taktsignals in allen Teilnehmern (1,1a) erfolgt, insbesondere mittels eines kombinierten Takt-TriggerSignals.

14. Koordinatenmessgerät mit einem Kommunikationssystem mit Teilnehmern (1,1a) nach einem der Ansprüche 11 bis 13, welches nach einem Verfahren nach einem der Ansprüche 1 bis 10 arbeitet, insbesondere wobei ein im Betrieb auswechselbarer Teilnehmer (1,1a), speziell ein wechselbarer Mess-Probe-Teilnehmer, mit dem Kommunikationssystem verbindbar ist.

15. Computerprogrammprodukt mit Programmcode, der auf einem maschinenlesbaren Träger gespeichert ist oder Computer-Daten-Signal, verkörpert durch eine elektromagnetische Welle, zur Durchführung des Verfahrens nach einem der Ansprüche 1 bis 10, insbesondere wobei der Programmcode einen Inhalt eines Kennungsbereichs einer empfangenen Meldung mit einer Soll-Kondition vergleicht und aufgrund des Vergleichsergebnisses den Inhalt des Kennungsbereichs entsprechend einer Abbildungsfunktion modifiziert und dann die modifizierte Meldung weitersendet und/oder die Meldung lokal verarbeitet, vorzugsweise wenn das Programm in einem Teilnehmer (1,1a) eines Messsystems, speziell in dessen Meldungsverarbeitungseinheit, aufgeführt wird.
